# EUROPÄISCHE PATENTANMELDUNG

(11) **EP 1 342 590 A2**
(43) Veröffentlichungstag der Anmeldung: **10.09.2003**
(21) Anmeldenummer: 03405142.5
(22) Anmeldetag: 03.03.2003
(51) Int. Cl.: B44C 5/04, E04F 13/00

(54) **Wandbelagelement**

(30) Priorität: 04.03.2002 CH 3742002
(71) Anmelder: Brändle, David, 9205 Waldkirch (CH)
(72) Erfinder: Brändle, David, 9205 Waldkirch (CH)
(74) Vertreter: Liebetanz, Michael, Dipl.-Phys.

(57) **Zusammenfassung**

Ein Wandbelagelement (10), insbesondere eine Wandverkleidung, ist auf einer zentralen Trägerschicht (1) ausgebildet, auf der auf einer ersten Seite der Trägerschicht (1) eine Gestaltungsfläche (7) ausgebildet ist, die von einer durchsichtigen Versiegelungsschicht (8) abgedeckt ist. Damit sind vorab - fern einer Baustelle - handwerkliche Gestaltungen in ein Wandbelagelement (10) einbringbar, welches anschliessend fugenlos an dem gewünschten Ort einsetzbar ist. Damit können kunsthandwerkliche Elemente in kosteneffizienter Weise in ein fugenloses Wandbelagelement (10) integriert werden.

## Beschreibung

Die Erfindung bezieht sich auf ein Wandbelagelement, insbesondere eine Wandverkleidung, mit einer zentralen Trägerschicht und mit einer an einer ersten Seite der Trägerschicht angebrachten Oberflächenschicht.

Ein solches Flächenbelagelement ist aus der EP 0 884 172 bekannt, bei der der Körper der Trägerschicht aus Sperrholz besteht.

Ein typischer Vertreter eines Wandbelagelementes sind Keramik-Fliesen. Diese bestehen aus kleinen Einheiten, die mit Fugen verlegt werden. Fugenlose Belage bestehen heute beispielsweise aus den eingangs genannten Materialien, d.h. grossflächig verlegten zum Beispiel auf Kunststoff basierenden Schichten. Keramikfliesen haben die bekannten Vorzüge und Nachteile eines Verlegens mit kleinen Flächenelementen und sind daher insbesondere nur mit gewissem zeitlichen handwerklichen Aufwand zu verlegen. Die grossflächig auf Kunststoffmaterial basierenden Belagelemente sind wenig individuell und zeigen keine handwerklichen Merkmale, die von den Kunden gerne gesehen werden.

Ausgehend von diesem Stand der Technik liegt der Erfindung die Aufgabe zu Grunde, einen Wandbelag der eingangs genannten Art anzugeben, der einfach zu verlegen ist und der handwerkliche Bearbeitungen in kurzen Zeitspannen und insbesondere vorab zulässt.

Diese Aufgabe wird erfindungsgemäss mit dem Wandbelagelement gemäss dem Oberbegriff des Anspruchs 1 dadurch gelöst, dass die auf der Trägerschicht vorgesehene Oberflächenschicht eine Gestaltungsfläche bildet, die von einer durchsichtigen Versiegelungsschicht abgedeckt ist.

Mit der Schichtenfolge gemäss dem Hauptanspruch werden Elemente der Fliesentechnik, nämlich das Verlegen von Elementen auf dem Untergrund mit handwerklichen Elementen verbunden.

In vorteilhafter Weise ist in einer Ausgleichsschicht ein Netz vorgesehen, welches Verspannungen in dem Material auffängt und vor einem Zerreissen schützt.

Über dem Trägermaterial können bei der Herstellung des Wandbelages gemäss der Erfindung Farbeffekte eingebracht werden, die anschliessend von der Versiegelungsschicht abgedeckt werden.

Nachfolgend werden zwei Ausführungsbeispiele der Erfindung anhand der Zeichnungen beispielhaft erläutert. Es zeigen:
- Fig. 1: eine schematische Schnittansicht eines Nassbaus gemäss einem ersten Ausführungsbeispiel der Erfindung, d.h. mit dem Aufbau des Wandbelagelementes auf dem Montageort, und
- Fig. 2: eine schematische Schnittansicht eines Trockenbaus gemäss einem zweiten Ausführungsbeispiel der Erfindung, d.h. mit vorgefertigten Wandbelagelementen.

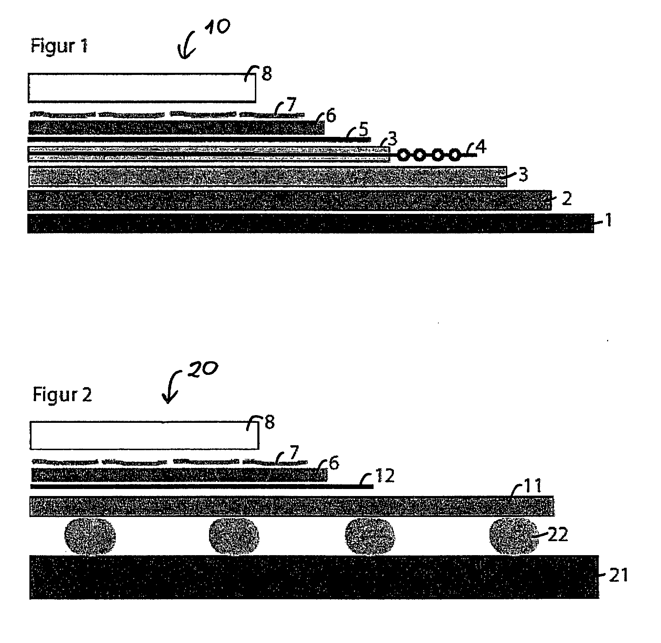

Bei einem bevorzugten Ausführungsbeispiel der Erfindung mit industrieller Vormontage besteht die in der Fig. 1 dargestellte Wandbelagelement 10 aus der nachfolgend beschriebenen Schichtenfolge, die eine schematische Schnittansicht eines Nassbaus gemäss einem ersten Ausführungsbeispiel der Erfindung zeigt. Ein Untergrund 1 bildet die zentrale Trägerschicht und kann aus mineralischen Werkstoffen, aus Holzwerkstoff, aus einem keramischen Werkstoff oder Plattenbelägen bestehen. Auf diesem Untergrund 1 ist vorteilhafterweise eine Haftmörtelschicht 2 aufgebracht.

Diese wird belegt mit einer Ausgleichsmörtelschicht 3. Ausserdem wird dem Ausgleichsmörtelmaterial 3 ein Netz 4 zur Überbrückung von Rissen eingelegt und wird mit diesem Ausgleichsmörtel geglättet. Die Schichten 1 und 2 sind vorteilhaft, aber nicht notwendigerweise Teil des Wandbelagelementes 10 nach Fig. 1.

Auf die genannte Schicht 3 wird eine dünne und glättende Copolymer-Grundierung 5 aufgetragen, auf die wiederum eine Reihe von Füllgrundierungen 6 aufgebracht sein können. In der Fig. 1 ist eine Füllgrundierung 6 dargestellt. Anschliessend wird auf die Füllgrundierung 6 eine Effektzusatzschicht 7 aufgetragen, die einen individuellen gestalterischen Effekt in das Wandbelagelement 10 einbringt. Die Effektschicht 7 kann insbesondere in einen oder mehreren, insbesondere zwei bis fünf, Arbeitsgängen mit Pigmentelementen auf wässriger Acrylatbasis hergestellt werden.

Schliesslich wird die Effektzusatzschicht 7 mit einer Versiegelungsschicht 8 auf Polyurethan-Acrylat Basis abgedeckt. Diese ist insbesondere absolut wasserfest, schlagbeständig, hochglänzend, hitzebeständig und transparent.

Bei dieser Art von Beschichtung werden im Nass- und Trockenbau sehr harte, formschöne und fugenlose Oberflächen erzeugt, die durch die Versiegelungsschicht 8 hindurch den in der Schicht 7 vorgesehenen und dort eingebrachten Effekt zeigen, da die Versiegelungsschicht 8 farblos und durchsichtig ist. Damit ist es möglich, in industriellem Massstab bei der Herstellung der Wandbelagelemente 10 die gewünschten Effekte in die Schicht 7 einzubringen, so dass vor Ort nur noch das Verlegen notwendig ist.

Die Fig. 2 zeigt den Einsatz der Erfindung gemäss einem zweiten Ausführungsbeispiel in einem Trockenbau, d.h. mit dem Aufbau des Wandbelagelementes 20 auf dem Montageort, in einer schematischen Schnittansicht.

Dabei wird auf einer entsprechenden Basisschicht 21 eines Untergrundes gearbeitet, der selbst noch mit einer sogenannten Tiefgrundierung vorbereitet sein kann. Das Wandbelagelement 20 wird mit einer beispielsweise beim Fliesenverlegen bekannten Technik mit Hilfe einem Klebstoff 22 auf dem Untergrund 21 aufgelegt. Dabei handelt es sich um ein industriell vorgefertigtes Wandbelagelement 20, das zur einfacheren Darstellung hier im Schnitt dargestellt ist, obwohl die bei seiner Herstellung entstehende Schichtenfolge nicht vor Ort, also eben nicht am Ort, an dem die Basisschicht 21 besteht, zusammengestellt wird.

Die Trägerschicht 11 besteht in Gestalt einer Kunststoffplatte, zum Beispiel aus PS, ABS, Melamin- oder Phenolharz, um nur einige Materialien zu nennen. Auf dieser Trägerschicht 11 ist eine Acrylhaftgrundierung 12 aufgetragen, auf der die Füllgrundierungen 6 liegen, die wiederum von einer Effektschicht 7 abgedeckt werden, die durch die durchsichtige Versiegelungsschicht 8 auf Polyurethan-Acrylatbasis abgeschlossen ist.

Es sind jeweils gleiche Merkmale in allen Zeichnungen mit denselben Bezugszeichen versehen.

Mit den oben beschriebenen Zeichnungen sind zwei Möglichkeiten genannt, ein entsprechendes Wandbelagelement 10 oder 20 herzustellen. Zum einen können grössere Wandbelagelemente 20 vorab in industriellem Massstab angefertigt und anschliessend verlegt werden, womit an der Baustelle ein ähnlicher Arbeitsablauf wie bei sonstiges Plattenverlegearbeiten stattfindet. Dieser Trokkenbau ist vor Ort schneller realisierbar. Dabei wird der Vorteil erreicht, dass die für den Käufer interessanten optischen Effekte in der durch die Versiegelungsschicht 8 geschützten Effektschicht 7 in einer Fabrik oder beim Handwerker vorab auf Lager hergestellt werden können und nur noch das fertige Element vor Ort verbracht wird.

Mit der Erfindung ist es aber auch möglich, in traditioneller Weise im Nassbau vorzugehen und eine entsprechende Effektschicht 7 auf einem in einem Haus vorhandenen Wandbelag (Untergrund 11) aufzubringen und anschliessend zu versiegeln.

Mit den in den Beispielen genannten Schichtenfolgen werden vorteilhafte Ergebnisse in Gestaltung und Kosten erreicht. Der Effekt in der Gestaltungsfläche 7 kann insbesondere durch Verteilung von Farbe auf und in den obersten Füllgrundierschichten 6 hervorgerufen werden, beispielsweise durch Verteilen der Farbe mit einem Pinsel. Damit sind vorab - fern einer Baustelle - handwerkliche Gestaltungen in ein Wandbelagelement 10 einbringbar, welches anschliessend fugenlos an dem gewünschten Ort einsetzbar ist. Damit können kunsthandwerkliche Elemente in kosteneffizienter Weise in ein fugenloses Wandbelagelement 10 integriert werden. Zum Erreichen des in der Einleitung genannten Vorteils sind dabei nur die im nachstehenden Hauptanspruch genannten Schichten notwendig.

## Patentansprüche

1. Wandbelagelement (10, 20), insbesondere eine Wandverkleidung, mit einer zentralen Trägerschicht (1, 11) und mit einer an einer ersten Seite der Trägerschicht (1, 11) angebrachten Oberflächenschicht (7), **dadurch gekennzeichnet, dass** die auf der Trägerschicht (1, 11) vorgesehene Oberflächenschicht (7) eine Gestaltungsfläche bildet, die von einer durchsichtigen Versiegelungsschicht (8) abgedeckt ist.

2. Wandbelagelement (10, 20) nach Anspruch 1, **dadurch gekennzeichnet, dass** die in die Oberflächenschicht (7) integrierte Gestaltungsfläche auf dem Auftrag von Pigmentelementen (7) auf einer oder einer Abfolge von Füllgrundierungen. (6) aufbaut und/oder die Farbe und Kontrast bestimmenden Pigmentelemente (7) in der oder den Füllgrundierungen (6) verteilt sind.

3. Wandbelagelement (10, 20) nach Anspruch 2, **dadurch gekennzeichnet, dass** die Pigmentelemente (7) durch einen oder mehreren Pinsel auf und/oder in der oder den Füllgrundierungen (6) verteilt sind.

4. Wandbelagelement (10, 20) nach einem der vorstehenden Ansprüche, **dadurch gekennzeichnet, dass** die Versiegelungsschicht (8) auf Polyurethan-Acrylatbasis aufgebaut ist.

5. Wandbelagelement (10, 20) nach einem der vorstehenden Ansprüche, **dadurch gekennzeichnet, dass** die Pigmentelemente (7) auf wässriger Acrylatbasis aufgebaut sind.

6. Wandbelagelement (10, 20) nach einem der vorstehenden Ansprüche, **dadurch gekennzeichnet, dass** die zentrale Trägerschicht (1) eine erste Grundierung (5, 12) aufweist, auf der die Füllgrundierung(en) (6) aufgebracht sind.

7. Wandbelagelement (20) nach einem der Ansprüche 1 bis 6, **dadurch gekennzeichnet, dass** die zentrale Trägerschicht (1) mit Oberflächenschicht (7) und Versiegelungsschicht (8) auf einem Basisgrund (21) über ein Adhäsionsmaterial (22) aufsetzbar ist.

8. Wandbelagelement (10) nach einem der Ansprüche 1 bis 6, **dadurch gekennzeichnet, dass** sie erste ausgleichende Mörtelschichten (2, 3) aufweist, auf der eine erste Grundierung (5) und/oder die besagten Füllgrundierung(en) (6) aufgebracht sind.

9. Wandbelagelement (10) nach Anspruch 8, **dadurch gekennzeichnet, dass** in den besagten Mörtelschichten (2, 3) ein Rissüberbrückungsnetz (4) eingelegt ist.
